# EUROPÄISCHE PATENTSCHRIFT

(11) **EP 3 017 243 B1**
(45) Veröffentlichungstag und Bekanntmachung des Hinweises auf die Patenterteilung: **14.02.2018**
(21) Anmeldenummer: 14736364.2
(22) Anmeldetag: 02.07.2014
(51) Int. Cl.: F21V 8/00, G02F 1/313

(54) **BELEUCHTUNGSANORDNUNG MIT LASER ALS LICHTQUELLE**
LIGHTING ARRANGEMENT COMPRISING A LASER AS LIGHT SOURCE
SYSTÈME D'ÉCLAIRAGE MUNI D'UN LASER EN TANT QUE SOURCE LUMINEUSE

(30) Priorität: 04.07.2013 DE 102013213138
(43) Veröffentlichungstag der Anmeldung: 11.05.2016
(73) Patentinhaber: Zumtobel Lighting GmbH, 6850 Dornbirn (AT)
(72) Erfinder: SEYRINGER, Heinz, A-6973 Höchst (AT)
(74) Vertreter: Thun, Clemens
(86) Internationale Anmeldenummer: PCT/EP2014/064076
(87) Internationale Veröffentlichungsnummer: WO 2015/000965

(56) Entgegenhaltungen:
- WO-A2-01/38905
- DE-A1- 19 850 140
- US-A- 5 664 032

## Beschreibung

Die vorliegende Erfindung betrifft eine Beleuchtungsanordnung, mit der linear angeordnete punktförmige Lichtquellen zu Beleuchtungszwecken erzeugt werden können. Insbesondere weist die erfindungsgemäße Beleuchtungsanordnung dabei zumindest zwei Laser unterschiedlicher Farbe als Lichtquelle auf und stellt eine vollintegrierte optische Lösung dar. Aus dem Stand der Technik sind bereits verschiedene Varianten von Beleuchtungsanordnungen bekannt, die einen Laser als Lichtquelle verwenden. All diese Beleuchtungsanordnungen weisen eine Freistrahloptik auf. Typischerweise wird dabei das Licht des Lasers über einen Mikro-Elektro-Mechanisches System (MEMS) Chip, der im einfachsten Fall ein verstellbarer Spiegel ist, umgelenkt und aus der Beleuchtungsanordnung ausgegeben. Der Vorteil eines Lasers als Lichtquelle besteht in der höheren Effizienz und dass man das Licht des Lasers besser in Wellenleitern transportieren kann, als beispielsweise das Licht von klassischen LEDs. Ein weiterer Vorteil eines Lasers als Lichtquelle ist, dass eine dynamischere Ausleuchtung von Bereichen möglich ist.

Der Nachteil der aus dem Stand der Technik bekannten Beleuchtungsanordnungen, insbesondere der MEMS-Lösungen, liegt allerdings darin, dass Freistrahloptiken eine hohe Empfindlichkeit gegen Umwelteinflüsse aufweisen, wie zum Beispiel Wasserdampf auf den Oberflächen der Spiegel. Ferner sind solche Freistrahloptiken nicht integrierbar und sind äußerst empfindlich auf Justierungenauigkeiten zwischen Laser und Spiegel, beispielweise verursacht durch Vibrationen. Ferner sind die aus dem Stand der Technik bekannten Beleuchtungsanordnungen aufgrund der Freistrahloptik sehr aufwändig herzustellen und zu betreiben, insbesondere hinsichtlich einer nötigen exakten Ausrichtung zwischen Laser und Spiegel. Insbesondere Spiegel sind zudem auch mechanisch sehr empfindlich und können leicht beschädigt werden. Ein weiterer Nachteil der bekannten MEMS-Lösungen ist, dass nur die Lichtverteilung, d.h. die Position an der Licht abgegeben wird, aber nicht die Lichtintensität änderbar ist.

Aus der DE 198 50 140 A1 sind eine Vorrichtung und ein Verfahren zur Erzeugung von Teilstrahlen für einen Linienscanner bekannt. wobei hier der sog. elektrooptische Effekt genutzt wird. Das zu Grunde liegende physikalische Prinzip ist, dass gekoppelte Wellenleiter, Primär- und Sekundärwellenleiter, dabei so nahe benachbart sind, dass eine sog. evaneszente Welle aus dem Primärwellenleiter in den Sekundärwellenleiter hineinreicht und sich dort gleichfalls die Strahlungsintensität aufbaut. Durch Verwendung von dieelektrischen oder ferroeletkrischen Materialien für die Wellenleiter kann jedoch deren Brechungsindex durch eine angelegte Spannung variiert werden, so dass dadurch die evaneszente Welle stärker bzw. schwächer wird. Eine Modulation der ausgelenkten Teilstrahlung ist dann über eine Variation der Höher der anliegenden Spannung möglich

Ausgehend von den aus dem Stand der Technik bekannten Beleuchtungsanordnungen, insbesondere MEMS-Lösungen, ist es eine Aufgabe der vorliegenden Erfindung, die oben beschriebenen Nachteile zumindest zu reduzieren, bestenfalls zu beseitigen. Insbesondere ist es eine Aufgabe der vorliegenden Erfindung, eine Beleuchtungsanordnung mit einem Laser als Lichtquelle bereit zu stellen, die kompakter, zuverlässiger und unabhängiger von Umwelteinflüssen ist als der Stand der Technik. Eine weitere Aufgabe der vorliegenden Erfindung ist es, eine integrierte optische Lösung für eine solche Beleuchtungsanordnung bereitzustellen. Dabei ist eine Anforderung an die Beleuchtungsanordnung, dass eine exakte Ausrichtung der Komponenten der Beleuchtungsanordnung verhältnismäßig einfach ist. Eine weitere Anforderung ist, dass die Beleuchtungsanordnung nicht nur sehr kompakt ist, sondern insbesondere auch als eine flache Einheit integriert werden kann. Schließlich soll es die Beleuchtungsanordnung ermöglichen, die Verteilung als auch die Intensität des Lichts zu verändern.

Die oben beschriebenen Aufgaben werden durch eine Beleuchtungsanordnung gemäß dem unabhängigen Anspruch 1 gelöst. Die abhängigen Ansprüche bilden den Kerngedanken der Erfindung auf vorteilhafte Art und Weise weiter, um weitere Anforderungen zu erfüllen.

Die vorliegende Erfindung betrifft eine Beleuchtungsanordnung, die umfasst:
einen länglichen Hauptwellenleiter, einen oder mehrere verteilt an dem Hauptwellenleiter und vorzugsweise zumindest abschnittsweise quer zu diesem angeordnete Nebenwellenleiter, zumindest zwei Laser, die dazu ausgelegt sind voneinander unterschiedliche Farben von Licht abzugeben, wobei jeder der zumindest zwei Laser dazu ausgelegt ist, das Licht in wenigstens ein Ende des Hauptwellenleiters einzukoppeln, und eine oder mehrere Auskoppeleinheiten, die dazu ausgelegt sind, Licht aus dem Hauptwellenleiter in die Nebenwellenleiter auszukoppeln, wobei die Auskoppeleinheiten Ringresonatoren sind, und aus einem Material bestehen, dessen Brechzahl veränderbar ist, wobei die Brechzahl des Materials veränderbar ist, wenn das Material einem elektromagnetischen und/oder thermischen Feld und/oder Licht ausgesetzt ist und die Brechzahl des Materials derart veränderbar ist, dass Licht einer Farbe ausgekoppelt wird, wobei wenigstens den Auskoppeleinheiten zugewandte Endbereiche von jedem Nebenwellenleiter aus einem Material bestehen, dessen Brechzahl veränderbar ist, wenn es einem elektromagnetischen und/oder thermischen Feld und/oder Licht ausgesetzt ist.

Die Beleuchtungsanordnung stellt eine integrierte optische Lösung mit einem Laser als Lichtquelle dar. Alle Vorteile eines Lasers als Lichtquelle gegenüber bspw. einer LED, d.h. eine höhere Effizienz und eine dynamischere Ausleuchtung, werden von der vorliegenden Erfindung genutzt, ohne dass die Nachteile einer Freistrahloptik in Kauf genommen werden müssen. Beispielweise ist die erfindungsgemäße Beleuchtungsanordnung unempfindlicher gegenüber Umwelteinflüssen als der Stand der Technik. Da auch keine Spiegel, wie bei aus dem Stand der Technik bekannten Anordnungen, verwendet werden, ist die erfindungsgemäße Beleuchtungsanordnung auch unempfindlicher gegenüber Justierungenauigkeiten, Vibrationen und Erschütterungen. Auch eine exakte Ausrichtung zwischen Laser und Spiegel entfällt, d.h. die vorliegende Erfindung ist einfacher herzustellen und zu betreiben. Schließlich kann die Beleuchtungsanordnung kleiner, insbesondere deutlich flacher, als aus dem Stand der Technik bekannte Beleuchtungsanordnungen konstruiert werden.

Vorteilhafterweise sind die Ringresonatoren derart zu dem Außenumfang des Hauptwellenleiters angeordnet und derart ausgebildet, dass Licht aus dem Hauptwellenleiter in die Ringresonatoren koppeln kann.

Die Ringresonatoren erfüllen dabei insbesondere eine bestimmte Resonanzbedingung, die eine Lichtauskopplung aus dem Hauptwellenleiter ermöglicht. Der Abstand zu dem Hauptwellenleiter und der Radius der Ringresonatoren sind entsprechend gewählt. Das zugrundeliegende Prinzip der Lichtauskopplung beruht auf einer Art Tunneleffekt, der aus dem Bereich der Signalübertragung bekannt und nicht an sich Kernbestandteil der Erfindung ist. Durch die Ringresonatoren werden also punktförmige Lichtquellen der Beleuchtungsanordnung entlang des vorzugsweise länglichen Hauptwellenleiters angeordnet, vorzugsweise in regelmäßigen Abständen.

Vorteilhafterweise sind die Ringresonatoren derart zu den Nebenwellenleitern angeordnet, dass Licht aus den Ringresonatoren in die Nebenwellenleiter koppeln kann.

Durch den gleichen Effekt wie oben beschrieben wird Licht, das einen Ringresonator entlangläuft bzw. in diesem lokalisiert ist, durch eine Art Tunneleffekt in einen dem Ringresonator zugeordneten Nebenwellenleiter übertragen und letztendlich vorzugsweise aus dem der Beleuchtungsanordnung abgewandten Stirnende des Nebenwellenleiters ausgegeben. Der Abstand der Ringresonatoren zu den entsprechend zugeordneten Nebenwellenleitern ist entsprechend gewählt.

Durch eine Veränderung der Brechzahl der Auskoppeleinheiten kann der Anteil des an diesen Stellen auszukoppelnden Lichts bestimmt werden. Beispielweise ist die Resonanzbedingung eines Ringresonators durch Veränderung der Brechzahl des Materials des Ringresonators veränderbar. Die Auskoppeleinheiten können beispielweise gemeinsam verändert werden. Vorzugsweise können die Auskoppeleinheiten individuell bzgl. ihrer Brechzahl verändert werden. Somit kann individuell eingestellt werden, wie viel Licht aus welcher punktförmigen Lichtquelle der Beleuchtungsanordnung ausgegeben wird. Es kann also mit der erfindungsgemäßen Beleuchtungsanordnung eine lineare Anordnung punktförmiger Lichtquellen erzielt werden, deren Intensität jeweils einzeln einstellbar ist. Dadurch kann beispielweise eingestellt werden, welche Fläche(n) durch die Beleuchtungsanordnung beleuchtet wird und sogar mit welcher Intensität das/die einzelne(n) Flächenelement(e) beleuchtet wird/werden. Das Material ist also beispielweise mittels elektromagnetischer Strahlung, durch ein Magnetfeld und/oder mit Wärme in seiner Brechzahl veränderbar. Somit kann mit einfach steuerbaren Parametern die Menge des ausgekoppelten Lichts gezielt und individuell für jede Auskoppeleinheit beeinflusst werden.

Vorteilhafterweise weist die Beleuchtungsanordnung wenigstens ein Element zum Erzeugen eines elektromagnetischen und/oder thermischen Feldes und/oder von Licht auf.

Die Beleuchtungsanordnung besitzt damit also eine integrierte Ansteuerung zum Verändern der Auskoppelbereiche und damit zum Verändern der Lichtintensitäten der Auskoppeleinheiten.

Vorteilhafterweise ist auf einer oder beiden Seiten von jeder Auskoppeleinheit ein Element zum Erzeugen eines elektromagnetischen und/oder thermischen Feldes und/oder von Licht angeordnet.

Dadurch wird eine besonders Effektive Ansteuerung von jeder Auskoppeleinheit einzeln gewährleistet.

Vorteilhafterweise ist die Brechzahl des Materials veränderbar, wenn das Material beleuchtet wird, und ist wenigstens ein Element zum Beleuchten der Auskoppeleinheiten vorgesehen.

Die Auskoppeleinheiten sind somit also mittels eines opto-optischen Effekts ansteuerbar. Beispielweise kann die Ansteuerung mit einem erzeugten Steuerlichtsignal und/oder sogar mittels Umgebungslicht realisiert werden. Diese Ausführungsform verspricht eine besonders schnelle Veränderung der Brechzahl des Materials der Auskoppeleinheit(en) und somit eine Beleuchtungsanordnung, für die besonders schnell und äußerst selektiv die punktlichtförmigen Lichtintensitäten eingestellt werden können.

Vorteilhafterweise ist der Hauptwellenleiter in mehrere parallele Wellenleiter verzweigt, wobei jeder der parallelen Wellenleiter mit mehreren Auskoppeleinheiten versehen ist.

Dadurch kann eine Beleuchtungsanordnung mit flächiger bzw. matrixartiger Lichtabgabe hergestellt werden.

Bei einer solchen Ausführungsform der erfindungsgemäßen Beleuchtungsanordnung kann ferner darauf Einfluss genommen werden, welche Lichtfarbe am effizientesten aus dem Hauptwellenleiter ausgekoppelt wird. Die Lichtfarbe und/oder die Lichtfarbtemperatur jeder Auskoppeleinheit, also jeder punktförmigen Lichtquelle der Beleuchtungsanordnung, können also individuell eingestellt werden. Es kann dadurch auch einfach ein mischfarbiges, bspw. weißes Licht, erzeugt werden. Dazu können beispielweise jeweils drei Auskoppeleinheiten nahe aneinander angeordnet und somit zu einer Gruppe oder Einheit zusammengefasst werden. Die Auskoppeleinheiten der Gruppe werden dann so gesteuert, dass je eine Auskoppeleinheit rotes, blaues bzw. grünes Licht ausgibt, um insgesamt ein weißes Licht zu erzeugen. Die Intensität und/oder Lichtfarbtemperatur des so erzeugten Weißlichts ist einfach und schnell einstellbar. Die drei Auskoppeleinheiten einer solchen Gruppe können auch zusammen einem Nebenwellenleiter zugeordnet sein.

Weiterhin kann ferner die Intensität des insgesamt aus jeder punktförmigen Lichtquelle der Beleuchtungsanordnung ausgegebenen Lichts eingestellt werden. Insbesondere in Verbindung mit verschiedenfarbigen Lasern kann damit sogar die Farbe des ausgekoppelten Lichts und gleichzeitig die Intensität des Lichts für jede punktförmige Lichtquelle individuell und selektiv eingestellt werden. Beispielweise wird dazu einerseits über eine Veränderung der Brechzahl einer Auskoppeleinheit Einfluss auf die Farbe des ausgekoppelten Lichts genommen, während über die Einstellung bzw. Veränderung der Brechzahl des zugeordneten Nebenwellenleiters Einfluss auf die Intensität des ausgekoppelten Lichts genommen wird.

Vorteilhafterweise ist jedem Nebenwellenleiter ein Element zum Erzeugen eines elektromagnetischen und/oder thermischen Feldes und/oder von Licht zugeordnet.

Besonders vorteilhaft ist es, diese den Nebenwellenleitern zugeordneten Elemente mit weiteren Elementen zu kombinieren, die den Auskoppeleinheiten zugeordnet sind, um somit eine integrierte Ansteuerung für Lichtfarbe bzw. Farbtemperatur als auch Lichtintensität zu ermöglichen.

Die vorliegende Erfindung wird nun im Bezug auf die beigefügten Figuren im Detail beschrieben.
- Figur 1: zeigt eine Ausführungsform einer Beleuchtungsanordnung der vorliegenden Erfindung;
- Figur 2: zeigt ein Beispiel einer Beleuchtungsanordnung nicht gemäß der vorliegenden Erfindung;
- Figur 3: zeigt ein weiteres Beispiel einer Beleuchtungsanordnung nicht gemäß der vorliegenden Erfindung.

Das Grundprinzip der vorliegenden Erfindung beruht darauf, dass ein vorzugsweise länglicher Wellenleiter bereitgestellt wird, in dessen wenigstens einem Ende mit Hilfe wenigstens eines Lasers Licht eingekoppelt wird. Ferner sind, vorzugsweise in regelmäßigen Abständen, an dem länglichen Wellenleiter eine oder mehrere Auskoppeleinheiten vorgesehen, die Licht in einen oder mehrere quer zu dem Hauptwellenleiter angeordnete relativ kurze Nebenwellenleiter auskoppeln. Über die dem Hauptwellenleiter abgewandten Stirnflächen dieser Nebenwellenleiter wird dann Licht abgegeben.

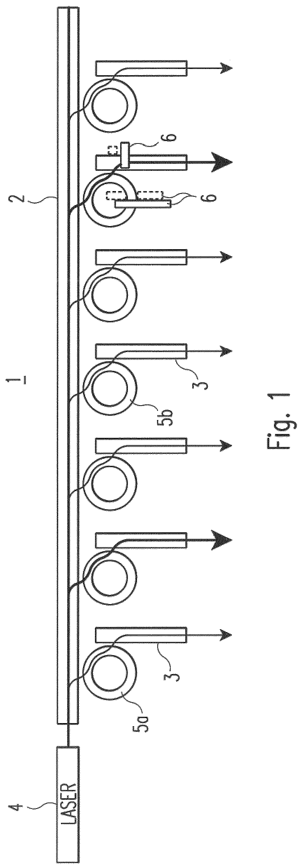

Figur 1 zeigt eine Ausführungsform der vorliegenden Erfindung. Die Beleuchtungsanordnung 1 weist den Hauptwellenleiter 2 auf, der vorzugsweise länglicher Form ist. Der längliche Hauptwellenleiter 2 kann sich in seiner Ausdehnungsrichtung auch in mehrere, vorzugsweise parallel verlaufende Hauptwellenleiterzweige verzweigen, um einen länglichen und flächigen bzw. matrixartigen Hauptwellenleiter 2 zu bilden. Der Hauptwellenleiter 2 bzw. jeder Hauptwellenleiterzweig kann sich auch biegen oder krümmen und ist in Figur 1 nur beispielhaft als gerade gezeigt. Der Hauptwellenleiter kann auch ringförmig sein. In ein erstes Ende des Hauptwellenleiters 2 (bzw. an einer bestimmten Stelle eines ringförmigen Hauptwellenleiters 2) wird Licht aus verschiedenen Lasern 4 in ein Ende des Hauptwellenleiters 2 eingespeist. Es ist auch möglich, Licht aus mehreren Lasern in beide Enden des Hauptwellenleiters 2 einzukoppeln. Der in Figur 1 gezeigte Laser 4 könnte ferner auch in den Hauptwellenleiter 2 integriert sein, beispielsweise in diesen eingegossen sein. Dadurch könnte die erfindungsgemäße Beleuchtungsanordnung 1 noch robuster, kompakter und effizienter gemacht werden, da in diesem Fall keine Verluste beim Einkoppeln des Laserlichts in den Hauptwellenleiter 2 auftreten können. Ferner könnten auch Auskoppelverluste aus der Laserdiode selbst reduziert werden, da ein reduzierter Brechzahlunterschied zwischen Hauptwellenleiter 2 und Laser 4 die Folge wäre. Vorteilhafterweise kann das Licht des Lasers auch zunächst durch einen Phosphor und oder Quantenpunktstrukturen konvertiert werden, um den nachteiligen Effekt des Speckling zu beseitigen. Speckling kann aufgrund des kohärenten Laserlichts auftreten.

Entlang des Hauptwellenleiters 2, sind, allgemein bezeichnet, Auskoppeleinheiten 5a, 5b, 5c vorgesehen. Die Auskoppeleinheiten 5a, 5b, 5c sind vorzugsweise in regelmäßigen Abständen zueinander angeordnet oder in regelmäßig angeordneten Gruppen nahe aneinander liegender Auskoppeleinheiten vorgesehen. In Figur 1 sind die Auskoppeleinheiten als Ringresonatoren 5a ausgebildet. Über diese Ringresonatoren 5a wird Licht aus dem Hauptwellenleiter 2 ausgekoppelt und wiederum in senkrecht zu dem Hauptwellenleiter 2 stehende Nebenwellenleiter 3 gekoppelt und aus deren Stirnseite ausgegeben. Zur verbesserten Ausgabe aus den Stirnseiten der Nebenwellenleiter 3 können noch entsprechende optische Elemente vorgesehen sein, um die Lichtabgabe zu beeinflussen, beispielweise Filter, Linsen, Gitter, Blenden oder dergleichen. Insbesondere können auf den Stirnflächen der Nebenwellenleiter 3 auch Konversionsmittel vorgesehen sein, die dazu geeignet sind, das Licht in ein für die gewünschte Beleuchtung geeignetes anderes Licht umzusetzen. Dabei kann zum Beispiel von einem durch das Licht angeregten Konversionsmittel ein sekundär emittiertes Licht abgegeben werden. Vorzugsweise verändert das Konversionsmittel wenigstens von einem Teil des Lichts die Wellenlänge. Ein oder mehrere Konversionsmittel können verwendet werden, um weißes Licht zu erzeugen, das von der erfindungsgemäßen Beleuchtungsanordnung 1 ausgegeben wird.

Die in Figur 1 gezeigten Ringresonatoren 5a wirken als optische Auskoppler. Die Ringresonatoren 5a befinden sich am Außenumfang des Hauptwellenleiters 2 sowie andererseits in der Nähe der Nebenwellenleiter 3. Der Effekt des Auskoppelns des Laserlichts aus dem Hauptwellenleiter 2 in die Ringresonatoren 5a ist mit dem aus der Quantenmechanik bekannten Tunneleffekt vergleichbar. Insbesondere sind die Ringresonatoren derart zu dem Außenumfang des Hauptwellenleiters 2 angeordnet und ausgebildet, dass Licht aus dem Hauptwellenleiter 2 in die Ringresonatoren 5a tunneln bzw. koppeln kann. Insbesondere muss dazu der Abstand der Ringresonatoren 5a zu dem Hauptwellenleiter 2 und der Umfang bzw. Radius der Ringresonatoren 5a entsprechend gewählt werden. Abstand und Radius der Ringresonatoren 5a können dabei abhängig von der Wellenlänge des Laserlichts gewählt sein. Die Resonanzbedingungen der Ringresonatoren 5a sind vorzugsweise derart gewählt, dass das Laserlicht mit maximaler Effizienz d.h. maximaler Lichtstärke in die Ringresonatoren 5a einkoppelt.

Auf die gleiche Art und Weise wird dann auch das in den Ringresonatoren 5a entlanglaufende Licht, das in diesen quantenmechanisch lokalisiert ist, in die entsprechenden zugeordneten Nebenwellenleiter 3 eingekoppelt. Durch die wiederkehrende Anordnung von Ringresonatoren 5a und zugehörigen Nebenwellenleitern 3 kann an den gewünschten Stellen entlang des Hauptwellenleiters 2 Licht ausgekoppelt werden. Erfindungsgemäß können die Resonanzbedingungen der Ringresonatoren 5a gezielt verändert werden, vorzugsweise individuell für jeden Ringresonator 5a verändert werden. Durch eine derartige Veränderung kann der Anteil des an dieser Stelle des Hauptwellenleiters 2 auszukoppelnden Lichts zumindest hinsichtlich der Lichtintensität eingestellt werden. Durch eine solche Einstellung ist es nicht nur möglich zu bestimmen, welche Fläche von der erfindungsgemäßem Beleuchtungsanordnung 1 beleuchtet wird, das heißt aus welchen Ringresonatoren 5a Licht überhaupt ausgekoppelt wird, sondern auch mit welcher Intensität das Licht aus den jeweiligen Ringresonatoren 5a ausgekoppelt wird. Die Resonanzbedingungen können beispielweise durch Veränderung der Radien der Ringresonatoren 5a oder des Materials der Ringresonatoren 5a verändert werden.

Die vorliegende Erfindung schlägt vor, die Ringresonatoren 5a aus einem speziellen Material herzustellen, dessen Brechzahl verändert werden kann. Beispielsweise kann dabei die Veränderung der Brechzahl durch einen thermooptischen, elektro-optischen, magneto-optischen und/oder opto-optischen Effekt erwirkt werden. Beispielsweise können spezielle Materialien zum Einsatz kommen, die je nachdem, ob sie etwa einem elektrischen Feld, einem Magnetfeld, einem Lichtfeld oder einem thermischen Feld ausgesetzt sind, ihre Brechzahl verändern. Diese Effekte sind beispielsweise in Polymeren stark ausgeprägt, weshalb sich als Material für die Ringresonatoren 5a, zumindest für zu verändernde Bereiche, Polymere anbieten.

Vorzugsweise umfasst die Beleuchtungsanordnung 1 wenigstens ein Element 6 zum Erzeugen eines elektrischen Feldes, magnetischen Feldes, elektromagnetischen Feldes, thermischen Feldes oder eines Lichtstrahls. Beispielsweise können zur Ansteuerung über ein elektromagnetisches Feld an beiden Seiten von jedem Ringresonator 5a felderzeugende Elemente 6 vorgesehen sein. Mittels dieser Einstellelemente 6 kann dann durch Veränderung der Brechzahl des Materials der Ringresonatoren 5a eingestellt werden, wie viel Licht durch jeden entsprechenden Ringresonator 5 a ausgekoppelt und in den zugeordneten Nebenwellenleiter 3 übertragen wird. Es kann ein derartiges Einstellelement 6 für die gesamte Beleuchtungsanordnung 1 vorgesehen sein. Es kann aber auch für jeden Ringresonator 5 a ein individuelles Element 6 vorgesehen sein, sodass die Einstellung der Materialbrechzahl für jeden Ringresonator 5a individuell erfolgen kann. Somit kann eine lineare Anordnung von punktförmigen Lichtquellen entlang des Hauptwellenleiters 2 erzielt werden, deren Intensität jeweils einzeln eingestellt werden kann.

In gleicher Weise können natürlich auch ein oder mehrere solcher Elemente 6 zum Anlegen etwa eines thermischen Feldes an die Ringresonatoren 5a oder an jeden einzelnen Ringresonator 5a vorhanden sein. Durch das Einstellen der Wärme des Materials der Ringresonatoren 5a wird dann dessen Auskoppeleffizienz eingestellt. Als weiteres Beispiel kann auch ein Beleuchtungselement 6 einen Ringresonator 5a oder auch mehrere Ringresonatoren 5a gelichzeitig oder einzeln mit einem Lichtsignal beleuchten und dadurch ansteuern. Das auf einen Ringresonator 5a treffende Licht ändert bei geeigneter Materialwahl dessen Brechzahl, sodass sich auch die Auskoppeleffizienz verändert.

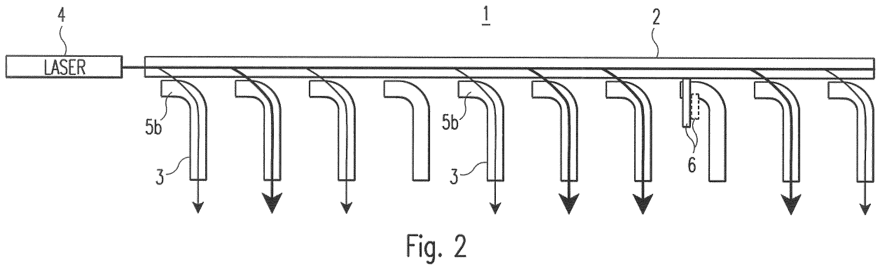

Die Figur 2 zeigt ein Beispiel der Beleuchtungsanordnung 1 nicht gemäß der vorliegenden Erfindung. Die mit gleichen Referenzzeichen wie in Figur 1 versehenen Elemente sind identisch wie oben für die erste Ausführungsform beschrieben. Der Unterschied zwischen den Ausführungsformen liegt lediglich darin, dass in der zweiten Ausführungsform die Auskoppeleinheiten 5a, 5b, 5c anders gebildet sind. Anstatt der Ringresonatoren 5a der ersten Ausführungsform wirken nun Endabschnitte 5b der Nebenwellenleiter 3 als die Auskoppeleinheiten 5a, 5b, 5c. Insbesondere ist dazu jeder Nebenwellenleiter 3 derart an seinem dem Hauptwellenleiter 2 zugewandten Endabschnitt abgebogen bzw. gekrümmt, dass sich der Endbereich 5b nahezu parallel und nahe des Hauptwellenleiters 2 erstreckt. Durch eine entsprechend nahe Anordnung der Endabschnitte 5b der Nebenwellenleiter 3 zu dem Hauptwellenleiter 2 kann wiederum Licht aus dem Hauptwellenleiter 2 auskoppeln.

Wiederum kann ein individuelles Einstellen der Auskoppeleffizienz aus dem Hauptwellenleiter 2 in jeden Nebenwellenleiter 3 dadurch erfolgen, dass zumindest die sich nahe an dem Hauptwellenleiter 2 befindlichen Endabschnitte 5 der Nebenwellenleiter 3 aus einem Material gebildet sind, welches wie oben beschrieben durch ein geeignetes Feld angesteuert werden kann, um die Brechzahl zu verändern und einzustellen.

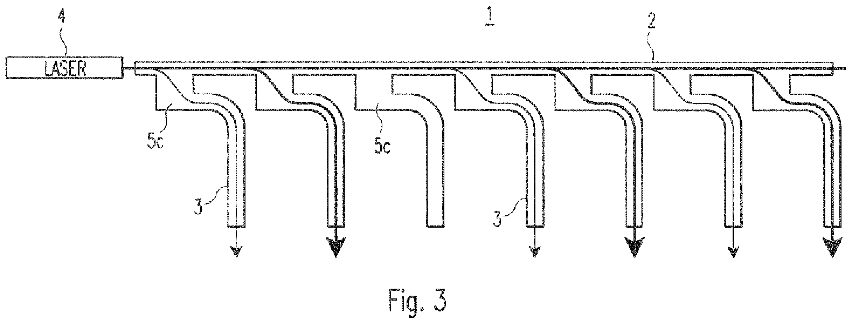

Figur 3 zeigt ein weiteres Beispiel der Beleuchtungsanordnung 1 nicht gemäß der vorliegenden Erfindung. Die Beleuchtungsanordnung 1 der Ausführungsform der Figur 3 ist wiederum ähnlich wie die Beleuchtungsanordnungen 1 der vorher beschriebenen Ausführungsformen gebildet. Einziger Unterschied ist, dass anstatt Ringresonatoren 5a bzw. gekrümmten Endabschnitten 5b der Nebenwellenleiter 3 nun sogenannte Multimodeninterferenz-Koppler als die Auskoppeleinheiten 5a, 5b, 5c verwendet werden. Die Multimodeninterferenz-Koppler sind insbesondere rechteckige

Endbereiche 5c der Nebenwellenleiter 3, die jeweils eine im Querschnitt etwa rechteckige Form aufweisen und jeweils unmittelbar an den Hauptwellenleiter 2 angrenzen. Die Multimodeninterferenz-Koppler können also Teil des Hauptwellenleiters 2 sein.

Wiederum sind zumindest diese rechteckigen Endbereiche 5c aus einem Material hergestellt, so dass sie hinsichtlich ihrer Brechzahl mittels eines geeigneten Feldes wie oben beschrieben veränderbar sind. Durch das entsprechende Material und entsprechend angeordnete Einstellelemente 6 kann wiederum die Effizienz des Auskoppelns aus jeder Auskoppeleinheit durch Einstellen einer gewünschten Brechzahl gesteuert werden. Erfindungsgemäß ist vorgesehen, dass mehrere Laser 4 zum Einkoppeln von Licht in den Hauptwellenleiter 2 verwendet werden. Vorzugsweise werden insbesondere Laser 4 verwendet, die in unterschiedlichen Farben, beispielsweise Rot, Grün und Blau leuchten bzw. Licht abgeben. Durch eine entsprechende Einstellung der Brechzahlen der einzelnen Auskoppeleinheiten 5a, 5b, 5c (wie oben beschrieben) kann nunmehr Einfluss darauf genommen werden, welche Farbe am effizientesten aus dem Hauptwellenleiter 2 ausgekoppelt wird. In diesem Fall könnte also für die einzelnen Nebenwellenleiter 3 eingestellt werden, welches Licht, insbesondere Licht welcher Farbe aus dem Hauptwellenleiter 2 in welchen Auskoppeleinheiten 5a, 5b, 5c ausgekoppelt wird. Dazu koppeln vorzugsweise alle verschiedenen farbigen Laser 4 gleichzeitig in den Hauptwellenleiter 2 ein. Erfindungsgemäß ist weiterhin vorgesehen, dass sowohl die Farbe des aus dem Hauptwellenleiter 2 ausgekoppelten Lichts als auch die Intensität des durch die Nebenwellenleiter 3 abgestrahlten Lichts einstellbar ist. Dazu ist vorgesehen, dass Teile der Nebenwellenleiter 3 ebenfalls aus einem Material bestehen, dessen Brechzahl durch ein gleiches oder anderes Feld einstellbar ist. Die Nebenwellenleiter 3 können auch vollständig aus einem solchen Material gebildet sein. Beispielsweise zeigt die Figur 1 wie auch Einstellelemente 6 neben den Nebenwellenleitern 3 angeordnet werden können, um zumindest die Brechzahl deren Endbereiche zu variieren. Durch ein entsprechendes Einstellen der Brechzahl dieser Endbereiche kann die Effizienz der Auskopplung des Lichts aus der Auskoppeleinheit 5a, 5b, 5c in Figur 1 insbesondere dem Ringresonator 5a, in den Nebenwellenleiter 3 verändert bzw. eingestellt werden. Auf diese Weise kann somit nicht nur die Farbe sondern auch die Intensität des über die Nebenwellenleiter 3 abgegebenen Lichts verändert werden. Erfindungsgemäß sind sowohl die Auskoppeleinheiten 5a, 5b, 5c als auch die jeweils zugeordneten Nebenwellenleiter 3 aus einem brechzahlveränderlichen Material hergestellt und sind entsprechende Einstellelemente 6 an jedem Nebenwellenleiter 3 und an jeder Auskoppeleinheit 5a, 5b, 5c vorgesehen. Vorteilhafterweise sind dabei die Auskoppeleinheiten 5a, 5b, 5c aus einem andersartigen brechzahlveränderlichen Material hergestellt als die zugeordneten Nebenwellenleiter 3. Insbesondere ist dabei der Unterschied der Materialien, dass unterschiedliche Felder verwendet werden müssen, um die Brechzahl zu ändern. Entsprechend sind neben Auskoppeleinheiten 5a, 5b, 5c und Nebenwellenleitern unterschiedliche Einstellelemente vorgesehen. Als ein Beispiel sind die Materialien der Auskoppeleinheiten 5a, 5b, 5c durch Wärme in ihrer Brechzahl veränderbar und sind die Materialien der Nebenwellenleiter 3 durch elektrische und/oder magnetische Felder in ihrer Brechzahl veränderbar. Dies garantiert eine getrennt ausführbare Ansteuerung auch bei kleinen Abständen. Andere Beispiele sind möglich. Es ist auch möglich solche Materialunterschiede zwischen einzelnen Auskoppeleinheiten 5a, 5b, 5c und/oder einzelnen Nebenwellenleitern 3 vorzusehen, um verschiedene punktförmige Lichtquellen der Beleuchtungsanordnung 1 gezielt getrennt voneinander zu kontrollieren.

Die vorliegende Erfindung beschreibt zusammenfassend eine integrierte optische Lösung für eine Beleuchtungsanordnung 1 mit zumindest zwei Lasern 4 unterschiedlicher Farbe als Lichtquelle. Die Laser koppeln Licht in einem vorzugsweise länglichen Hauptwellenleiter 2 ein. Über mehrere Auskoppeleinheiten 5a, 5b, 5c kann das Laserlicht in mehrere quer zu dem Hauptwellenleiter 2 angeordnete Nebenwellenleiter 3 eingekoppelt werden. Die Auskoppeleinheiten 5a, 5b, 5c sind Ringresonatoren 5a. Sowohl die Auskoppeleinheiten als auch die Endbereiche von jedem Nebenwellenleiter bestehen aus einem Material, dessen Brechzahl veränderbar ist. Die Beleuchtungsanordnung 1 der vorliegenden Erfindung kann eine Freistrahloptik aus dem Stand der Technik ersetzen und ist deshalb kompakter, zuverlässiger und unabhängiger von Umwelteinflüssen. Zudem kann durch das Verändern bspw. der Resonanzbedingungen der Ringresonatoren 5a oder allgemein der Brechzahl der Auskoppeleinheiten 5a, 5b, 5c der Anteil des Lichts bestimmt werden, der aus den punktförmigen Lichtquellen der Beleuchtungsanordnung 1, die durch die

Auskoppeleinheiten 5a, 5b, 5c bestimmt werden, ausgekoppelt wird.

## Patentansprüche

1. Beleuchtungsanordnung (1), die umfasst:
einen länglichen Hauptwellenleiter (2),
einen oder mehrere verteilt an dem Hauptwellenleiter (2) und vorzugsweise zumindest abschnittsweise quer zu diesem angeordnete Nebenwellenleiter (3),
zumindest zwei Laser (4), die dazu ausgelegt sind, voneinander unterschiedliche Farben von Licht abzugeben, wobei jeder der zumindest zwei Laser (4) dazu ausgelegt ist, das Licht in wenigstens ein Ende des Hauptwellenleiters (2) einzukoppeln, und
eine oder mehrere Auskoppeleinheiten (5a, 5b, 5c), die dazu ausgelegt sind, Licht aus dem Hauptwellenleiter (2) in die Nebenwellenleiter (5) auszukoppeln,
wobei die Auskoppeleinheiten (5a, 5b, 5c) Ringresonatoren (5a) sind und aus einem Material bestehen, dessen Brechzahl veränderbar ist, wobei die Brechzahl des Materials veränderbar ist, wenn das Material einem elektromagnetischen und/oder thermischen Feld und/oder Licht ausgesetzt ist und die Brechzahl des Materials derart veränderbar ist, dass Licht einer Farbe ausgekoppelt wird,
wobei wenigstens den Auskoppeleinheiten (5a, 5b, 5c) zugewandte Endbereiche von jedem Nebenwellenleiter (3) aus einem Material bestehen, dessen Brechzahl veränderbar ist, wenn es einem elektromagnetischen und/oder thermischen Feld und/oder Licht ausgesetzt ist.

2. Beleuchtungsanordnung (1) gemäß Anspruch 1, wobei die Ringresonatoren (5a) derart zu dem Außenumfang des Hauptwellenleiters (2) angeordnet und derart ausgebildet sind, dass Licht aus dem Hauptwellenleiter (2) in die Ringresonatoren (5a) koppeln kann.

3. Beleuchtungsanordnung (1) gemäß Anspruch 2, wobei die Ringresonatoren (5a) derart zu den Nebenwellenleitern (3) angeordnet sind, dass Licht aus den Ringresonatoren (5a) in die Nebenwellenleiter (3) koppeln kann.

4. Beleuchtungsanordnung (1) gemäß einem der Ansprüche 1 - 3, die ferner wenigstens ein Element (6) zum Erzeugen eines elektromagnetischen und/oder thermischen Feldes und/oder von Licht aufweist.

5. Beleuchtungsanordnung (1) gemäß Anspruch 4, wobei auf einer oder beiden Seiten von jeder Auskoppeleinheit (5a, 5b, 5c) ein Element (6) zum Erzeugen eines elektromagnetischen und/oder thermischen Feldes und/oder von Licht angeordnet ist.

6. Beleuchtungsanordnung (1) gemäß einem der Ansprüche 1 - 5, wobei die Brechzahl des Materials veränderbar ist, wenn das Material beleuchtet wird, und wenigstens ein Element (6) zum Beleuchten der Auskoppeleinheiten (5a, 5b, 5c) vorgesehen ist.

7. Beleuchtungsanordnung (1) gemäß einem der Ansprüche 1 - 6, wobei der Hauptwellenleiter (2) in mehrere parallele Wellenleiter verzweigt ist, wobei jeder der parallelen Wellenleiter mit mehreren Auskoppeleinheiten (5a, 5b, 5c) versehen ist.

8. Beleuchtungsanordnung gemäß einem der Ansprüche 1 - 7, wobei jedem Nebenwellenleiter (3) ein Element (6) zum Erzeugen eines elektromagnetischen und/oder thermischen Feldes und/oder von Licht zugeordnet ist.

## Claims

1. Lighting arrangement (1) comprises:
- an elongated main waveguide (2),
- one or more auxiliary waveguides (3) distributed on the main waveguide (2) and preferably arranged at least partially transversely thereto,
- at least two lasers (4) that are designed to emit colors of light that are different from each other, wherein each of the at least two lasers (4) is designed to couple the light into at least one end of the main waveguide (2), and
- one or more decoupling units (5a, 5b, 5c) connected thereto are designed to decouple light from the main waveguide (2) into the auxiliary waveguide (5),
- wherein the decoupling units (5a, 5b, 5c) are ring resonators (5a) and are made of a material with a variable refractive index, wherein the refractive index of the material is variable when the material is exposed to an electromagnetic and/or thermal field and/or light, and the refractive index of the material is so variable that light of a color is decoupled,
- wherein at least the end sections of each auxiliary waveguide (3) facing the decoupling units (5a, 5b, 5c) are made of a material whose refractive index is variable when exposed to an electromagnetic and/or thermal field and/or light.

2. Lighting arrangement (1) according to claim 1, wherein the ring resonators (5a) are so arranged with respect to the outer circumference of the main waveguide (2) and are so designed that light from the main waveguide (2) may couple into the ring resonators (5a).

3. Lighting arrangement (1) according to claim 2, wherein the ring resonators (5a) are arranged with respect to the auxiliary waveguide (3) that light from the ring resonators (5a) may couple into the auxiliary waveguide (3).

4. Lighting arrangement (1) according to any one of the claims 1-3, further comprises at least one element (6) for generating an electromagnetic and/or thermal field and/or light.

5. Lighting arrangement (1) according to claim 4, wherein an element (6) for generating an electromagnetic and/or thermal field and/or light is arranged on one or both sides of each decoupling unit (5a, 5b, 5c).

6. Lighting arrangement (1) according to one of the claims 1-5, wherein the refractive index of the material is variable when the material is illuminated, and at least one element (6) for illuminating the decoupling units (5a, 5b, 5c) is provided.

7. Lighting arrangement (1) according to claim 1-6, wherein the main waveguide (2) is branched into a plurality of parallel waveguides, wherein each of the parallel waveguides is provided with a plurality of decoupling units (5a, 5b, 5c).

8. Lighting arrangement (1) according to one of the claims 1-7, wherein each auxiliary waveguide (3) is associated with an element (6) for generating an electromagnetic and/or thermal field and/or light.

## Revendications

1. Dispositif d'éclairage (1) qui comprend :
un guide d'ondes principal allongé (2),
un ou plusieurs guides d'ondes secondaires (3) disposés de manière répartie sur le guide d'ondes principal (2) et de préférence au moins partiellement transversalement par rapport à celui-ci,
au moins deux lasers (4), qui sont conçus pour émettre des couleurs de lumière différentes l'une de l'autre, chacun des au moins deux lasers (4) étant conçu pour coupler de la lumière dans au moins une extrémité du guide d'ondes principal (2) et
une ou plusieurs unités de découplage (5a, 5b, 5c) qui sont conçues pour faire sortir la lumière du guide d'ondes principal (2) vers les guides d'ondes secondaires (5),
les unités de découplage (5a, 5b, 5c) étant des résonateurs annulaires (5a) et étant constitués d'un matériau, dont l'indice de réfraction est variable, l'indice de réfraction du matériau étant variable lorsque le matériau est soumis à un champ électromagnétique et/ou thermique et/ou à une lumière et l'indice de réfraction du matériau étant variable de façon à ce que de la lumière d'une couleur soit découplée,
au moins les zones d'extrémité de chaque guide d'ondes secondaires (3), orientées vers les unités de découplage (5a, 5b, 5c), étant constituées d'un matériau, dont l'indice de réfraction est variable lorsqu'il est soumis à un champ électromagnétique et/ou thermique et/ou à de la lumière.

2. Dispositif d'éclairage (1) selon la revendication 1, les résonateurs annulaires (5a) étant disposés par rapport la circonférence extérieure du guide d'ondes principale (2) et conçus de façon à ce que la lumière provenant du guide d'ondes principal (2) puisse entrer dans les résonateurs annulaires (5a).

3. Dispositif d'éclairage (1) selon la revendication 2, les résonateurs annulaires (5a) étant disposés par rapport aux guides d'ondes secondaires (3), de façon ce que la lumière provenant des résonateurs annulaires (5a) puisse entrer dans les guides d'ondes secondaires (3).

4. Dispositif d'éclairage (1) selon l'une des revendications 1 à 3, qui comprend en outre au moins un élément (6) pour la production d'un champ électromagnétique et/ou thermique et/ou de lumière.

5. Dispositif d'éclairage (1) selon la revendication 4, un élément (6) pour la production d'un champ électromagnétique et/ou thermique et/ou de lumière étant disposé sur un côté ou sur les deux côtés de chaque unité de découplage (5a, 5b, 5c).

6. Dispositif d'éclairage (1) selon l'une des revendications 1 à 5, l'indice de réfraction du matériau étant variable lorsque le matériau est éclairé et au moins un élément (6) étant prévu pour l'éclairage des unités de découplage (5a, 5b, 5c).

7. Dispositif d'éclairage (1) selon l'une des revendications 1 à 6, le guide d'ondes principal (2) étant ramifié en plusieurs guides d'ondes parallèles, chacun des guides d'ondes parallèles étant muni de plusieurs unités de découplage (5a, 5b, 5c).

8. Dispositif d'éclairage (1) selon l'une des revendications 1 à 7, un élément (6) pour la production d'un champ électromagnétique et/ou thermique et/ou de lumière étant attribué à chaque guide d'ondes secondaire (3).
